# EUROPEAN PATENT SPECIFICATION

(11) **EP 3 460 146 B1**
(45) Date of publication and mention of the grant of the patent: **02.10.2024**
(21) Application number: 18156179.6
(22) Date of filing: 09.02.2018
(51) Int. Cl.: E04H 6/02, H02S 20/00, H02S 20/10, H02S 20/23, F21S 9/03, F21V 23/04, F21Y 115/10

(54) **SOLAR VEHICLE CANOPY WITH LED SENSOR LIGHT**
SOLARFAHRZEUGDACH MIT LED-SENSORLICHT
CAPOTE DE VÉHICULE SOLAIRE AYANT UNE LUMIÈRE DE CAPTEUR À DEL

(30) Priority: 22.09.2017 EP 17192780
(43) Date of publication of application: 27.03.2019
(73) Proprietor: Yotrio Group Co., Ltd., Linhai City Zhejiang 317004 (CN)
(72) Inventor: Xie, Jianqiang, Linhai City Zhejiang 317007 (CN)
(74) Representative: Schulz Junghans Patentanwälte PartGmbB

(56) References cited:
- DE-U1- 202009 009 309
- JP-A- 2012 036 729
- JP-A- 2013 231 351
- KR-B1- 101 032 830
- US-A- 5 857 477

## Description

### TECHNOLOGY FIELD

This invention relates to a sunshade and, more particularly, to a solar vehicle canopy with LED sensor light.

### BACKGROUND ART

A vehicle canopy belongs to the sunshade product, and it is a simple device that can effectively prevent the car from sunlight exposure of the summer, which is favourably received by the market for a long time. In the last dozen years, with the advance of the standard of living, cars become more common, the need of vehicle canopy is growing, and the hommization becomes more and more damanding. However, in previous most clients used a simple fabric vehicle canopy which cannot meet the hommization needs of the clients. For example the Japanese patent application JP 2012 036 729 A, discloses a photovoltaic roof structure with an LED lighting device which simplifies and miniaturizes the structure of said lightening device while providing an increased amount of power generation through the photovoltaic modules. The Japanese patent application JP 2013 231 351 A discloses a solar roof structure for the use as a car port or roof for waiting spaces, with an illuminator which gives comfortable illumination at night and still provides sufficient daylight source during the day through the use of transparent modules stacked vertically. The German utility patent DE 20 2009 009309 U1 discloses an assembly kit for the production on carports, sun rooms or canopies comprising fewer parts to be assembled and wherein the preferred material is aluminum since it is less corrosive and more stable.The choices of the customers on the vehicle canopy products are also one-sided, most of them focus on the sunshade effect only, many problems exist in the use of it; in addition, as the vehicle canopy in prior art is complicated to install, the expected sunshade effect will not be achieved once the installing is improper.

More particularly, when the car is stopped under a vehicle canopy in the evening, there is usually no lighting or the lighting needs to be switched on manually, which is very inconvenience.

### SUMMARY OF THE INVENTION

To overcome at least one disadvantage of the prior art, this invention provides a solar vehicle canopy with LED sensor light.

To achieve the purpose above, this invention provides a solar vehicle canopy with LED according to claim 1.

In an embodiment of the invention, the top further comprises a polycarbonate sheet (PC sheet), side top pipes and top pipes; clamping grooves are respectively located in the side top pipes and top pipes, the PC sheet engages with the side top pipes and top pipes through the grooves.

In an embodiment of the invention, the top further comprises blocking elements respectively fixed on the two sides of the side top pipes and top pipes to stop the PC sheet.

In an embodiment of the invention, the solar vehicle canopy with LED sensor light further comprises a support assembly, and the top is mixed with the horizontal pipe assembly and the leg pipe assembly through the support assembly.

In an embodiment of the invention, the LED sensor module is am object-sensitive optic-controlled module, which electrically connects with at least one LED light.

In an embodiment of the invention, the LED sensor module further comprises a sensor power switch to turn on or turn off the LED sensor module.

In an embodiment of the invention, the solar receiving module is detachably fixed on the top.

In an embodiment of the invention, the leg pipe assembly comprises multiple leg pipes, and a step is disposed on one end of each leg pipe to carry part of the horizontal pipe assembly.

In conclusion, the solar vehicle canopy with LED sensor light provided by the invention can utilize the solar energy to power the LED light module, which is green and environment friendly. Further, the LED light is turned on or turned off through sensors, which is energy efficiency and hommization.

In particular, when some car or somebody getting close to the vehicle canopy in the evening, the LED sensor module generates a signal in a certain distance, hence the LED light is lighted; in daytime the LED light is turned off, meanwhile customers can select to turn on or turn off the main power switch of the LED sensor module to open the LED light or cut off the power to stop work, the design is more diversification and hommization.

The vehicle canopy is an arc sunshade, the PC sheet inserts the clamping groove of the arc top pipes to clamp directly, and it is more convenient assembly differing from the trim strip method fastened by the bolt on the market.

The whole sunshade frame of the vehicle canopy steady, the top pipes, the horizontal pipe and the leg pipe interlocked with each other by neighboring supports, which is simple operation and convenient assembly, and the main body of the sunshade is stable.

The solar receiving module is disposed above the top, the built-in battery can be disassembled and replaced independently, and the whole solar receiving module can be taken out and charged indoor.

In view of the figures, the technical solution of the invention is described in a manner sufficiently clear and complete with embodiments.

### BRIEF DESCRIPTION OF THE DRAWINGS

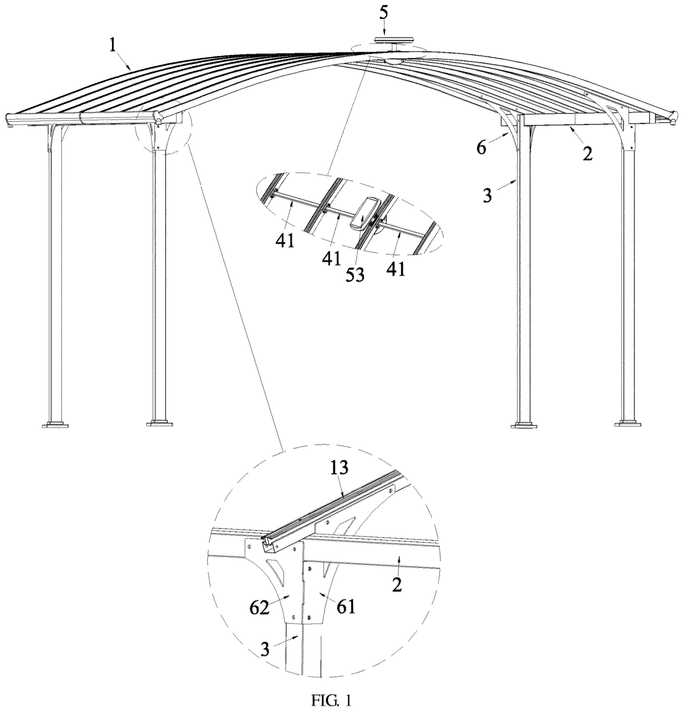

FIG. 1 is a schematic diagram of the solar vehicle canopy with LED sensor light of the invention;

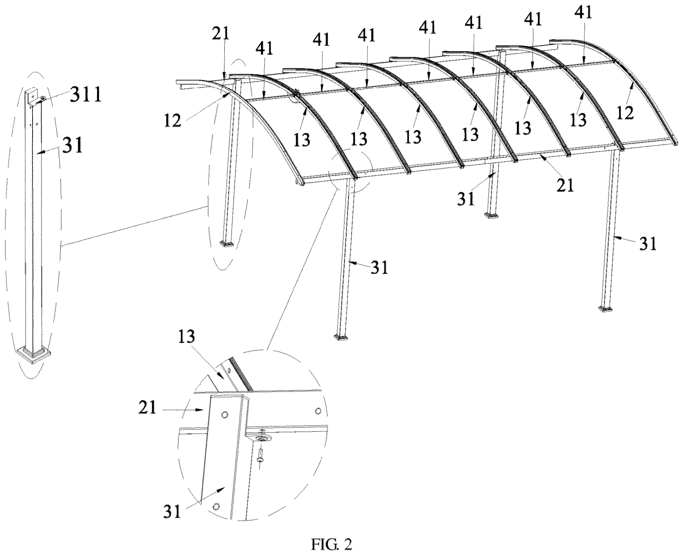

FIG. 2 is an assembling process schematic diagram of the solar vehicle canopy with LED sensor light of an embodiment of the invention;

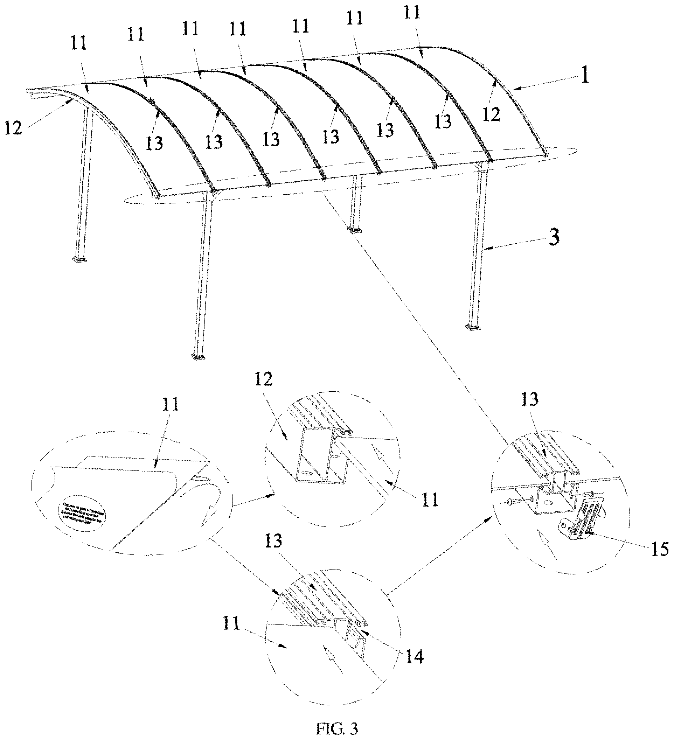

FIG. 3 is a further assembling schematic diagram of the solar vehicle canopy with LED sensor light in FIG. 2;

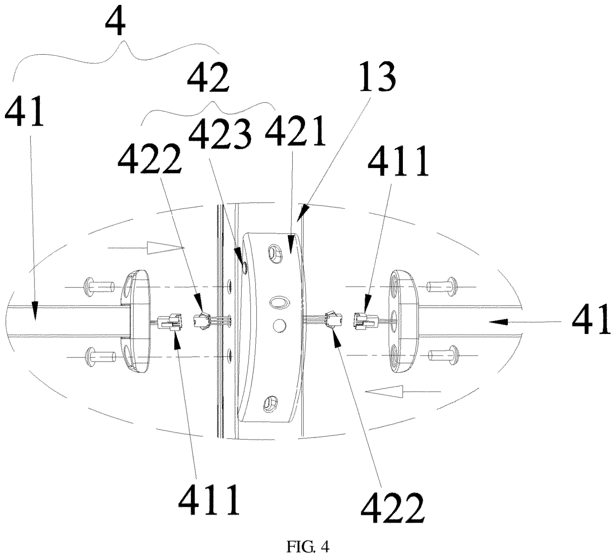

FIG. 4 is a partial assembling schematic diagram of the solar vehicle canopy with LED sensor light of an embodiment of the invention; and

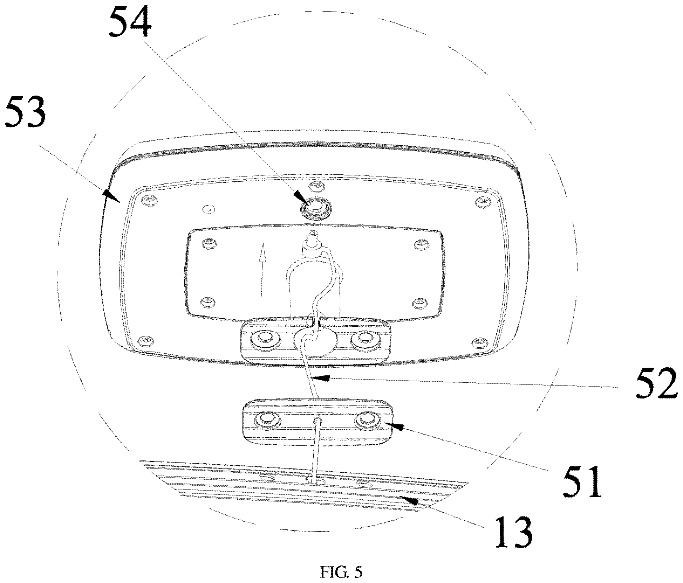

FIG. 5 is a partial decomposition diagram of the solar receiving module of an embodiment of the invention.

### DETAILED DESCRIPTION OF THE INVENTION

The invention relates to a solar vehicle canopy with LED sensor light, comprising:
a top (1);
a horizontal pipe assembly (2), disposed on two sides of the top (1);
a leg pipe assembly (3), clamped with the horizontal pipe assembly (2) to support the top (1);
an LED light module (4), comprising at least one LED light (41) and LED sensor module (42) electrically connected with each other; and
a solar receiving module (5), disposed above the top (1) and electrically connected with the LED light module (4),
characterised in that
the solar vehicle canopy with LED sensor light further comprises a support assembly (6), and the top (1) is mixed with the horizontal pipe assembly (2) and the leg pipe assembly (3) through the support assembly (6),
wherein the support assembly (6) comprises a lateral triangle support element (61) and a front triangle support element (62) which are able to interlock with each other, the two sides of the lateral triangle support element (61) respectively fix the top (1) and the leg pipe assembly (3), the two sides of the front triangle support element (62) respectively fix the horizontal pipe assembly (2) and the leg pipe assembly (3).

The top further comprises a polycarbonate sheet (PC sheet) 11, two side top pipes 12 and multiple top pipes 13. The PC sheet is a transparent panel, which can reduce the ultraviolet radiation and resist part of the solar energy. The top 1 comprised by the PC sheets 11 can shelter from the summer sun and rain, meanwhile it can make the strong sunlight reflect into the sunshade as a diffused light, so that the light ray in the sunshade is bright but not blinding, and the sight from the sunshade will not be influenced, which gets rid of the disadvantage of the opaque fabric vehicle canopy.

The side top pipes 12 and the top pipes 13 are connected with the LED light 41 in two sides respectively. Multiple strip particle LED chips are disposed in each LED light. An opening can be made in the top pipes 13 to pass the circuit.

Clamping grooves 14 are respectively located in the side top pipes 12 and the top pipes 13, the PC sheet 11 can be inserted into the clamping grooves 14 and slipped to clamp between two neighboring top pipes 13 or between the side top pipes 12 and the top pipe 13. By this assembly method, the assembling is simple and convenient, which overcome the cumbersome assembling by a trim strip method fastened by the bolt in prior art. Same structures are used in the side top pipes 12 and the top pipes 13, both of them have the clamping grooves 14, which standardizes the elements during manufacture and increase the production efficiency. Different structures can also be used in the side top pipes 12 and the top pipes 13, in other words, both of the top pipes 13 have the clamping grooves 14, while only one side of the side top pipes 12 has the clamping grooves 14. The invention makes no limit for that.

In the embodiment, the top 1 further comprises multiple blocking elements 15 respectively fixed on the two sides of the side top pipes 12 and the top pipes 13 to stop the PC sheet 11 from slipping out of the clamping grooves 14. The blocking elements 15 are constant connected with the side top pipes 12 and the top pipes 13 by bolts.

In the embodiment, the horizontal pipe assembly 2 further comprises two horizontal pipes 21, and the leg pipe assembly 3 further comprises four leg pipes 31. However, the invention makes no limit for the numbers of horizontal pipe 21 and leg pipe 31. In other embodiments, the horizontal pipe assembly 2 can comprise three horizontal pipes, and the leg pipe assembly 3 can comprise two or six leg pipes. A step 311 is disposed on one end of each leg pipe 31 to carry part of the horizontal pipe 21, and screws are disposed on the step 311 to fix the leg pipe 31 and the horizontal pipe 21 by threads.

In the embodiment, the solar vehicle canopy with LED sensor light further comprises a support assembly 6, and the top 1 is mixed with the horizontal pipe assembly 2 and the leg pipe assembly 3 through the support assembly 6. The support assembly 6, the horizontal pipe assembly 2 and the leg pipe assembly 3 are fastened by screws.

The support assembly 6 comprises a lateral triangle support element 61 and an front triangle support element 62 interlocked with each other, the two sides of the lateral triangle support element 61 respectively fix the top 1 and the leg pipe assembly 3, the two sides of the front triangle support element 62 respectively fix the horizontal pipe assembly 2 and the leg pipe assembly 3. More particular, the lower end of the front triangle support element 62 is fixed with one side of the leg pipe assembly 3 by screws, the lower end of the lateral triangle support element 61 is fixed with the other side of the leg pipe assembly 3 by screws (vertical to the side fixed by the front triangle support element 62). The lateral triangle support element 61 and he front triangle support element 62 are interlocked with each other and form a 90-degrees angle, a gap is in the lateral triangle support element 61, the horizontal pipe assembly 2 crosses the gap to be fixed, and is carried on the step 311 of the leg pipe assembly 3. The upper end of the front triangle support element 62 is reinforced with the horizontal pipe assembly 2 by screws.

The top pipe 13 is disposed on the horizontal pipe assembly 2 and they are fixed by screws. The upper end of the lateral triangle support element 61 is reinforced with the top pipe 13 by screws.

In conclusion, the top 1 is close to the horizontal pipe assembly 2 fastened by screws; the horizontal pipe assembly 2 is close to the upper end of the leg pipe assembly 3, the top pipe 13, the leg pipe assembly 3 and the horizontal pipe assembly 2 are interlocked by the lateral triangle support element 61 and the front triangle support element 62 and fastened by screws, the assembling method is simple operation and convenient assembly, and the main body of the sunshade is stable.

In the embodiment, the LED sensor module 42 further comprises a sensor assembly 421 above the top pipe 13, a sensor wire joint 422 and a sensor power switch 423. The light wire joint 411 of the LED light 41 is electrically connected with the sensor wire joint 422, then the light wire joint 411 of the LED light 41 crosses over the top pipe 13 and is connected with the light wire joint of the neighboring LED light end to end by turns. The two sides of the LED light 41 is then close to the top pipe 13 and fastened. By this method, all the wires has no leak, the wiring is more reasonable, and the harm to the wires by other objected are avoided.

The solar receiving module 5 further comprises a solar energy base seal 51, a solar receiving module cable 52 and a photovoltaic panel 53. An DC inner jack 54 is disposed on the lower cover of the photovoltaic panel 53 in the solar receiving module 5, the plug of the solar receiving module cable of the LED light 41 can be inserted into the DC inner jack 54 to make the LED light 41 electrically connect with the solar receiving module 5, and the detachably installing of the solar receiving module 5 is achieved.

A built-in battery is disposed in the solar receiving module 5 and can be disassembled and replaced independently. The solar receiving module 5 is detachably disposed on the top 1. When there's no sunlight, the whole solar receiving module can be taken out and charged indoor, which overcomes the limitation of the weather to the solar receiving module 5 and ensures the solar receiving module 5 to supply the power for the LED sensor module 42 everyday.

In the embodiment, the LED sensor module 42 is an object-sensitive optic-controlled module, which electrically connects with at least one LED light 41. First the optic-controlled module can detect weather it's day or night. When the object-sensitive optic-controlled module detects that the light is lower than the threshold value, it is judged to be night, then the object-sensitive optic-controlled module detects that something is getting close to the vehicle canopy, such as a car or a person, the LED sensor module 42 will generate an induction signal in a certain distance, and the LED light 41 shines, when the object-sensitive optic-controlled module detects that nothing is getting close to the vehicle canopy, the LED light 41 won't shine; When the object-sensitive optic-controlled module detects and judges to be daytime, the LED light 41 won't be turned on whether anything is getting close or not. In addition, customers can select to turn on or turn off the sensor power switch 423 to open the LED light 41 or cut off the power to stop work, and the design is more diversification and hommization. However, the invention makes no limit for the type of the LED sensor module 42. Any LED sensor module can achieve the same function is within the scope of protection of the invention. In other embodiments, the LED sensor module 42 can be a voice-activated optic-controlled module or an infrared optic-controlled module, when it's detected to be night, the LED light shines when a voice or heat source getting close in a certain distance.

In conclusion, the solar vehicle canopy with LED sensor light provided by the invention can utilize the solar energy to power the LED light module, which is green and environment friendly. Further, the LED light is turned on or turned off through sensors, which is energy efficiency and hommization.

In particular, when some car or somebody getting close to the vehicle canopy in the evening, the LED sensor module generates a signal in a certain distance, hence the LED light is lighted; in daytime the LED light is turned off, meanwhile customers can select to turn on or turn off the main power switch of the LED sensor module to open the LED light or cut off the power to stop work, the design is more diversification and hommization.

The vehicle canopy of the invention is an arc sunshade, the PC sheet inserts the clamping groove of the arc top pipes to clamp directly, and it is more convenient assembly differing from the trim strip method fastened by the bolt on the market. The whole sunshade frame of the vehicle canopy steady, the top pipes, the horizontal pipe and the leg pipe interlocked with each other by neighboring supports, which is simple operation and convenient assembly, and the main body of the sunshade is stable. The solar receiving module is disposed above the top, the built-in battery can be disassembled and replaced independently, and the whole solar receiving module can be taken out and charged indoor.

Although the invention is described in considerable detail with reference to certain preferred embodiments thereof, the scope of the appended claims should not be limited to the description of the preferred embodiments described above.

## Claims

1. A solar vehicle canopy with LED sensor light, comprising:
a top (1);
a horizontal pipe assembly (2), disposed on two sides of the top (1);
a leg pipe assembly (3), clamped with the horizontal pipe assembly (2) to support the top (1);
an LED light module (4), comprising at least one LED light (41) and LED sensor module (42) electrically connected with each other; and
a solar receiving module (5), disposed above the top (1) and electrically connected with the LED light module (4),
**characterised in that**
the solar vehicle canopy with LED sensor light further comprises a support assembly (6), and
the top (1) is mixed with the horizontal pipe assembly (2) and the leg pipe assembly (3) through the support assembly (6),
wherein the support assembly (6) comprises a lateral triangle support element (61) and a front triangle support element (62) which are able to interlock with each other, the two sides of the lateral triangle support element (61) respectively fix the top (1) and the leg pipe assembly (3), the two sides of the front triangle support element (62) respectively fix the horizontal pipe assembly (2) and the leg pipe assembly (3).

2. A solar vehicle canopy with LED sensor light according to claim 1, wherein the top (1) further comprises a polycarbonate sheet (11), side top pipes (12) and top pipes (13); clamping grooves (14) are respectively located in the side top pipes (12) and top pipes (13), the polycarbonate sheet (11) engages with the side top pipes (12) and top pipes (13) through the grooves (14).

3. A solar vehicle canopy with LED sensor light according to claim 1, wherein the top (1) further comprises blocking elements (15) respectively fixed on the two sides of the side top pipes (12) and top pipes (13) to stop the polycarbonate sheet (11).

4. A solar vehicle canopy with LED sensor light according to claim 1, wherein the LED sensor module (42) is an object-sensitive optic-controlled module, which electrically connects with at least one LED light (41).

5. A solar vehicle canopy with LED sensor light according to claim 1, wherein the LED sensor module (42) further comprises a sensor power switch (423) to turn on or turn off the LED sensor module (42).

6. A solar vehicle canopy with LED sensor light according to claim 1, wherein the solar receiving module (42) is detachably fixed on the top (1).

7. A solar vehicle canopy with LED sensor light according to claim 1, wherein the leg pipe assembly (3) comprises multiple leg pipes (31), a step is disposed on one end of each leg pipe (31) to carry part of the horizontal pipe assembly (2).

## Patentansprüche

1. Ein Solarfahrzeugdach mit LED-Sensorlicht, umfassend:
ein Oberteil (1);
eine horizontale Rohrkonstruktion (2), die an zwei Seiten des Oberteils (1) angeordnet ist;
eine Beinrohrkonstruktion (3), die mit der horizontalen Rohrkonstruktion (2) verklemmt ist, um das Oberteil (1) zu stützen;
ein LED-Lichtmodul (4), das mindestens ein LED-Licht (41) und ein LED-Sensormodul (42) umfasst, die elektrisch miteinander verbunden sind; und
ein Solar-Empfangsmodul (5), das oberhalb des Oberteils (1) angeordnet und elektrisch mit dem LED-Lichtmodul (4) verbunden ist,
**dadurch gekennzeichnet, dass**
das Solarfahrzeugdach mit LED-Sensorlicht des Weiteren eine Stützkonstruktion (6) umfasst, und das Oberteil (1) über die Stützkonstruktion (6) mit der horizontalen Rohrkonstruktion (2) und der Beinrohrkonstruktion (3) kombiniert ist,
wobei die Stützkonstruktion (6) ein seitliches dreieckiges Stützelement (61) und ein vorderes dreieckiges Stützelement (62) umfasst, die miteinander verriegeln können, wobei die beiden Seiten des seitlichen dreieckigen Stützelements (61) jeweils das Oberteil (1) und die Beinrohrkonstruktion (3) fixieren, die beiden Seiten des vorderen dreieckigen Stützelements (62) jeweils die horizontale Rohrkonstruktion (2) und die Beinrohrkonstruktion (3) fixieren.

2. Ein Solarfahrzeugdach mit LED-Sensorlicht nach Anspruch 1, wobei das Dach (1) des Weiteren eine Polycarbonatplatte (11), seitliche obere Rohre (12) und obere Rohre (13) umfasst; wobei sich in den seitlichen oberen Rohren (12) und oberen Rohren (13) jeweils Klemmnuten (14) befinden und die Polycarbonatplatte (11) durch die Nuten (14) mit den seitlichen oberen Rohren (12) und oberen Rohren (13) in Eingriff steht.

3. Ein Solarfahrzeugdach mit LED-Sensorlicht nach Anspruch 1, wobei das Oberteil (1) des Weiteren Sperrelemente (15) umfasst, die jeweils an den beiden Seiten der seitlichen oberen Rohre (12) und der oberen Rohre (13) befestigt sind, um die Polycarbonatplatte (11) anzuhalten.

4. Ein Solarfahrzeugdach mit LED-Sensorlicht nach Anspruch 1, wobei das LED-Sensormodul (42) ein objektsensitives, optisch gesteuertes Modul ist, das mit mindestens einem LED-Licht (41) elektrisch verbunden ist.

5. Ein Solarfahrzeugdach mit LED-Sensorlicht nach Anspruch 1, wobei das LED-Sensormodul (42) des Weiteren einen Sensorleistungsschalter (423) umfasst, um das LED-Sensormodul (42) ein- oder auszuschalten.

6. Ein Solarfahrzeugdach mit LED-Sensorlicht nach Anspruch 1, wobei das Solar-Empfangsmodul (42) am Oberteil (1) abnehmbar befestigt ist.

7. Ein Solarfahrzeugdach mit LED-Sensorlicht nach Anspruch 1, wobei die Beinrohrkonstruktion (3) mehrere Beinrohre (31) umfasst und an einem Ende jedes Beinrohrs (31) eine Stufe angeordnet ist, die einen Teil der horizontalen Rohrkonstruktion (2) trägt.

## Revendications

1. Capote de véhicule solaire ayant une lumière de capteur à LED, comprenant :
un dessus (1) ;
un ensemble de tuyaux horizontaux (2), disposés sur deux côtés du dessus (1) ;
un ensemble de tuyaux de jambe (3), serrés avec l'ensemble de tuyaux horizontaux (2) pour supporter le dessus (1) ;
un module de lumière à LED (4), comprenant au moins une lumière à LED (41) et un module de capteur à LED (42) connectés électriquement l'un à l'autre ; et
un module de réception solaire (5), disposé au-dessus du dessus (1) et connecté électriquement au module de lumière à LED (4),
**caractérisé en ce que**
le capote de véhicule solaire ayant une lumière de capteur à LED comprend en outre un ensemble de support (6), et
le dessus (1) est mélangé à l'ensemble de tuyaux horizontaux (2) et l'ensemble de tuyaux de jambe (3) à travers l'ensemble de support (6),
dans lequel l'ensemble de support (6) comprend un élément de support triangulaire latéral (61) et un élément de support triangulaire avant (62) qui sont capables de se verrouiller l'un avec l'autre, les deux côtés de l'élément de support triangulaire latéral (61) fixent respectivement le dessus (1) et l'ensemble de tuyaux de jambe (3), les deux côtés de l'élément de support triangulaire avant (62) fixent respectivement l'ensemble de tuyaux horizontaux (2) et l'ensemble de tuyaux de jambe (3).

2. Capote de véhicule solaire ayant une lumière de capteur à LED selon la revendication 1, dans lequel le dessus (1) comprend en outre une feuille de polycarbonate (11), des tuyaux de dessus latéraux (12) et des tuyaux de dessus (13) ; des rainures de serrage (14) sont respectivement situées dans les tuyaux de dessus latéraux (12) et tuyaux de dessus (13), la feuille de polycarbonate (11) s'engage avec les tuyaux de dessus latéraux (12) et tuyaux de dessus (13) à travers les rainures (14).

3. Capote de véhicule solaire ayant une lumière de capteur à LED selon la revendication 1, dans lequel le dessus (1) comprend en outre des éléments de blocage (15) respectivement fixés sur les deux côtés des tuyaux de dessus latéraux (12) et tuyaux de dessus (13) pour stopper la feuille de polycarbonate (11).

4. Capote de véhicule solaire ayant une lumière de capteur à LED selon la revendication 1, dans lequel le module de capteur à LED (42) est un module à commande optique, sensible à un objet, qui se connecte électriquement à au moins une lumière à LED (41).

5. Capote de véhicule solaire ayant une lumière de capteur à LED selon la revendication 1, dans lequel le module de capteur à LED (42) comprend en outre un interrupteur de capteur (423) pour allumer ou éteindre le module de capteur à LED (42).

6. Capote de véhicule solaire ayant une lumière de capteur à LED selon la revendication 1, dans lequel le module de réception solaire (42) est fixé de manière amovible sur le dessus (1).

7. Capote de véhicule solaire ayant une lumière de capteur à LED selon la revendication 1, dans lequel l'ensemble de tuyaux de jambe (3) comprend de multiples tuyaux de jambe (31), un gradin est disposé sur une extrémité de chaque tuyau de jambe (31) pour porter une partie de l'ensemble de tuyaux horizontaux (2).
